# EUROPÄISCHE PATENTSCHRIFT

(11) **EP 2 853 654 B1**
(45) Veröffentlichungstag und Bekanntmachung des Hinweises auf die Patenterteilung: **07.09.2022**
(21) Anmeldenummer: 14178089.0
(22) Anmeldetag: 22.07.2014
(51) Int. Cl.: E04F 13/08, F16B 13/14

(54) **KONSOLE UND FASSADENUNTERKONSTRUKTION MIT DER KONSOLE**
CONSOLE AND FAÇADE SUBSTRUCTURE WITH THE CONSOLE
CONSOLE ET INFRASTRUCTURE DE FAÇADE DOTÉE D'UNE TELLE CONSOLE

(30) Priorität: 22.07.2013 CH 12972013
(43) Veröffentlichungstag der Anmeldung: 01.04.2015
(73) Patentinhaber: GFT Fassaden AG, 9016 St. Gallen (CH)
(72) Erfinder: DÖRIG, Reto, 9016 St.Gallen (CH)
(74) Vertreter: Riederer Hasler & Partner Patentanwälte AG

(56) Entgegenhaltungen:
- EP-A1- 2 369 089
- EP-A2- 1 203 853
- EP-A2- 2 540 924
- AT-A4- 511 443
- CH-A5- 598 438
- DE-A1- 10 010 473
- FR-A1- 2 807 775
- FR-A1- 2 950 637
- GB-A- 2 374 615
- US-A- 2 021 610
- US-A- 3 909 907
- US-A- 4 584 814
- US-A- 4 693 653

## Beschreibung

Die vorliegende Erfindung betrifft eine Konsole gemäss Oberbegriff von Anspruch 1 sowie eine Fassadenunterkonstruktion gemäss Anspruch 11.

### Stand der Technik:

Es ist bekannt, eine Ankerstange chemisch in einem Bohrloch in Beton, Mauerwerk oder einem anderen Ankergrund zu befestigen. "Chemische Befestigung oder Verankerung" bedeutet eine Befestigung des Anker Stabs in einem Bohrloch mit einer aushärtenden Masse, die üblicherweise als Mörtel bezeichnet wird. Üblich sind Ein- oder Mehrkomponentenkunstharze, die auf diesem Anwendungsgebiet oft als Kunstharzmörtel bezeichnet werden, möglich sind auch hydraulisch abbindende Massen, einschliesslich Zementmörtel.

Die Offenlegungsschrift DE-OS-100 10 473 A1 beschreibt einen Verbundanker zur stoffschlüssigen Halterung eines Befestigungselements in einem Bohrloch. Der Verbundanker weist eine Patrone auf, die eine oder mehrere Kammern umfasst, in denen ein aufschäumender Stoff oder die Komponenten eines Mehrkomponentenharzes aufgenommen sind. Die Kammern sind so ausgebildet, dass diese beim Einschrauben einer Befestigungsschraube zerstört werden. Die Injektionspatrone kann im Schaft eines Kunststoffdübels untergebracht, der die Patrone wenigstens teilweise umgibt.

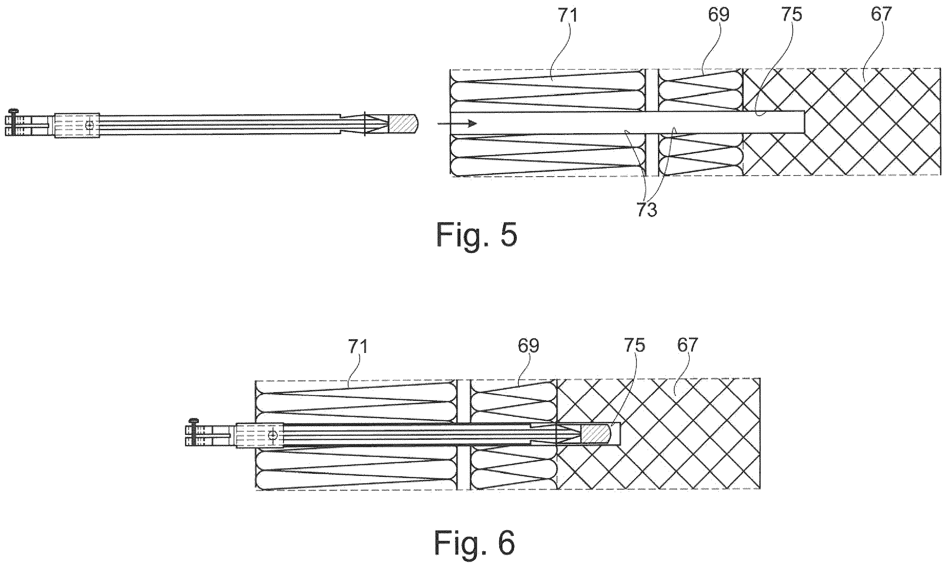

Das kanadische Patent CA-2 226 584 offenbart ein Verbindungsteil 1,2 mit einem ersten und einem zweiten Kopfstück 1, welche Endstücke mit einem Distanzglied miteinander verbunden sind, das im Wesentlichen den Raum zwischen dem Tragwerk und einer Verkleidung überbrückt. Das Distanzglied ist im Wesentlichen plattenförmig ausgebildet und besteht aus einem Kunststoffbaumaterial. Im Distanzglied und in den Endstücken 1 sind Befestigungsdurchgänge (s. Figur 6) vorgesehen, durch welche eine mechanische Befestigung zwischen den Endstücken und dem Distanzglied herstellbar ist. Diese mechanische Befestigung ist durch Befestigungsmittel in den Befestigungsdurchgängen herstellbar.

Das deutsche Gebrauchsmuster DE-U-20 2007 009 780 offenbart ein als Befestigungskonsole bezeichnetes Verbindungsteil, welches der Befestigung einer Fassade an einem Tragwerk dient. Es besitzt ein erstes und ein zweites Kopfstück (Konsolenfuss 2 und gegenüberliegendes Endstück), welche durch ein plattenförmiges Distanzglied 4 (Konsolensteg) miteinander verbunden sind. Das Distanzglied besteht aus einem glasfaserverstärkten Kunststoff, welches den Raum zwischen Tragwerk und Fassade überbrückt.

Das Patent AT-A-511 443 offenbart eine Einrichtung zur Befestigung einer Last an einer mit zumindest einer Dämmstoffschicht versehenen Wand. Die Einrichtung umfasst eine Hülse mit einem Aufnahmekanal für einen Befestigungsbolzen oder eine Befestigungsschraube. Von der Aussenseite der Hülse ragen mindestens zwei in axialer Richtung der Hülse sich erstreckende Stützrippen ab, wobei wenigstens eine davon weiter von der Hülse absteht als die andere. Die Hülse ist vorzugsweise aus Kunststoff oder einem Verbundwerkstoff, insbesondere einem faserverstärkten Kunststoff hergestellt. Die Länge der Hülse ist an die Dicke der Dämmstoffschicht angepasst. Die Befestigungsschraube, die bei der Montage in den Aufnahmekanal gesteckt und mit Hilfe eines Dübels in einer Beton- oder Ziegelwand verankert wird, ist hingegen eine konventionelle Metallschraube, sodass nach wie vor eine Wärmebrücke vorhanden ist.

Das französische Patent mit der Nummer FR 2 950 637 offenbart eine isolierte Wand aus einzelnen durch Mörtel oder einem Kleber zusammengehaltenen Mauerelementen, einer Isolation und einer Verkleidung. Ein Teil der Mauerelemente besitzt vorgeformte Löcher für die Aufnahme von Befestigungselementen für die Befestigung der Isolation und der Verkleidung. Die Befestigungselemente können aus Kunststoff oder Metall hergestellt sein. Soweit in den Figuren erkennbar, können die Befestigungselemente in den vorgeformten Löchern der Mauerelemente eingehängt werden. Die Befestigungselemente weisen zu diesem Zweck am vorderen Ende eine Rille auf.

Durch die EP-A-1 203 853 wird eine Befestigungselement zur Abstandsbefestigung von Leisten an einer vertikalen Wand vorgestellt, das eine Schraube umfasst, deren eines Ende zur Befestigung an der Wand ausgestaltet ist und deren anderes Ende ein Gewinde aufweist. Am Gewinde ist mittels eines ein Gegengewinde aufweisenden Bauteils ein Leistenhalter befestigbar, wobei der Leistenhalter gegenüber dem Bauteil frei verdrehbar ist. Die Schraube des Befestigungselements besteht aus einem Bolzen und einer Hülse, die auf den hinteren, aus der Wand herausragenden Abschnitt des Bolzens aufgeschoben ist. Der Bolzen besitzt einen vorderen Bolzenabschnitt, der wie eine Holzschraube ausgebildet ist und ein Gewinde auweist, das in einen Dübel einschraubbar ist. Gemäss der EP-A-1 203 853 wird die thermische Entkopplung allein durch den Dübel, nicht jedoch mit dem Befestigungselement selbst erreicht.

Bei der Sanierung von Altbauten, deren Fassaden bereits eine Dämmschicht aufweisen, muss für das Anbringen der Konsolen zuerst die bestehende Dämmschicht lokal entfernt werden, damit der Fuss der Konsole an der Aussenwand befestigt werden kann. Eine Befestigung der Konsole auf der Dämmschicht ist aus statischen Gründen nicht möglich. Eine solche nachträgliche Aufdämmung ist daher sehr aufwändig und teuer, weil nach dem Anbringen der Konsole die zuvor entfernte Dämmschicht wieder ersetzt werden muss.

### Aufgabe

Aufgabe der vorliegenden Erfindung ist es deshalb, eine Konsole und eine Fassadenunterkonstruktion mit der Konsole vorzuschlagen, welche das Problem der Wärmebrücken weitgehend eliminieren. Insbesondere ist ein Ziel, eine Konsole vorzuschlagen, welche sich auch für die nachträgliche Sanierung von bereits gedämmten Fassadenwänden einsetzen lässt. Dabei sollte die Konsole auf unterschiedliche Dämmstärken anpassbar sein, ohne dass sich deren Herstellkosten wesentlich erhöht. Ein weiteres Ziel ist es, eine Fassadenunterkonstruktion vorzuschlagen, die sich mit geringerem Aufwand als herkömmliche Fassadenunterkonstruktionen realisieren lässt.

### Beschreibung

Diese und weitere Ziele werden durch den Gegenstand gemäss Anspruch 1 erreicht. Vorteilhafte Ausgestaltungen des erfindungsgemässen Gegenstands sind in den Unteransprüchen definiert.

Die Erfindung betrifft eine Konsole für die Anbringung von Fassadenelementen an einer Gebäudewand. Diese Konsole, die auch als Fassadenanker bezeichnet werden kann, besitzt einen vorderes Einführende zur Verankerung in einer Gebäudewand und ein hinteres Kopfstück mit einer Befestigungsmöglichkeit für die Befestigung von Fassadenelementen.

Die erfindungsgemässe Konsole zeichnet sich nun dadurch aus, dass der eingesetzte Stab aus Kunststoff hergestellt ist, in welchem eine Faserverstärkung, vorzugsweise aus Endlosfasern, eingebettet ist. Ausserdem hat das vordere Einführende, das zur Verankerung in einer Wand dient, mindestens einen im Durchmesser verjüngten Zwischenabschnitt. Durch die dadurch bewirkte Hinterschneidung lässt sich der Stab mittels eines Mörtels gut in einem Bohrloch einer Gebäudewand verankern. Die Faserverstärkung kann durch ein bevorzugt mehrheitlich unidirektionales Fasergewebe oder durch im Wesentlichen in Längsrichtung ausgerichtete Rovingstränge resp. Endlosfasern gebildet sein. Diese Konsole hat den Vorteil, dass sie sich auch bei bereits mit einer Dämmung versehenen Wänden einsetzen lässt, da sie sie kein Fussstück aufweist. Der Stab der Konsole kann direkt in einem Bohrloch in der Gehäusewand verankert werden. Weil der Stab eine Faserverstärkung mit mehrheitlich in Längsrichtung ausgerichteten Fasern besitzt, ist die Belastbarkeit der Konsole ausserordentlich hoch. Durch den verjüngten Zwischenabschnitt kann die Auszugskraft so weit erhöht werden, dass die Konsole auch grossen Windlasten widerstehen kann.

Als Stab soll im Rahmen der vorliegenden Erfindung ein längliches, zylinderförmiges Teil verstanden werden, dessen Länge mindestens 10 mal länger als dessen Dicke und dessen Breite maximal 8 mal grösser als dessen Dicke ist. Im Unterschied dazu ist bei einer Platte die Dicke mindestens eine Grössenordnung kleiner als die anderen zwei Abmessungen, und die Platte ist grundsätzlich eben. Unter einem "Bohrloch" im Sinne der Erfindung ist allgemein ein Loch unabhängig von seiner Herstellung zu verstehen.

Vorteilhaft ist das vordere Ende des Stabs als Konus- oder Keilspitze ausgebildet und unmittelbar daran anschliessend folgt der verjüngte Zwischenabschnitt. Mittels der Keil- oder Konusspitze lässt sich der Stab gut in ein Bohrloch einführen, auch wenn dieses unter einer Dämmschicht liegt. Auch kann mit der Stabspitze ein vor dem Setzen des Stabs in das Bohrloch eingebrachte Mörtel gut verdrängt werden. Der verdrängte Mörtel kann dann den durch den verjüngten Zwischenabschnitt freigegebene Raum ausfüllen und dann nach der Aushärtung für eine hohe Auszugsfestigkeit des Stabes sorgen.

Vorteilhaft ist die Faserverstärkung des Stabs aus in Längsrichtung angeordneten Fasern, insbesondere Endlosfasern wie Rovingsträngen oder Filamentfasern, hergestellt. Durch die Verwendung von Endlosfasern, welche mehrheitlich im Wesentlichen die Länge des Stabs aufweisen, sind die Biegefestigkeit und damit die Belastbarkeit der Konsole sehr hoch. Zur Herstellung des Stabs kann die Faserverstärkung beispielsweise als unidirektionales Gelege in eine Spritzgussform eingelegt und dann mit einem geeigneten, die Matrix bildenden Kunststoff umspritzt werden. Die Länge der eingesetzten Endlosfasern entspricht vorzugsweise wenigstens 60%, besonders bevorzugt wenigstens 80% und ganz besonders bevorzugt wenigstens 90% der Länge des Stabs und sind wenigstens 20 mm, vorzugsweise wenigstens 30 mm und besonders bevorzugt wenigstens 50 mm lang. Die Endlosfasern sind im Wesentlichen in Richtung der Zug- und Druckkräfte orientiert, welche bei einer Verbiegung des Stabs auftreten. Die Zugkräfte können folglich von den Fasern optimal aufgenommen werden. Die Kunststoffmatrix kann grundsätzlich auch noch einen Anteil an Kurzschnittfasern aufweisen. Von Bedeutung hingegen ist, dass ein wesentlicher Anteil, insbesondere mehr als 40 Gew.%, vorzugsweise mehr als 60 Gew.% und besonders bevorzugt mehr als 70 Gew.% der Faserarmierung aus in Längsrichtung des Stabes angeordneten Endlosfasern oder Rovingsträngen besteht.

Bevorzugte Kunststoffe für die Herstellung des Stabs sind Polyamid, Polycarbonat, oder Polystyrol und besonders bevorzugt Polypropylen, da Polypropylen ein niedriges spezifisches Gewicht besitzt und günstig in der Herstellung ist.

Die hohe Biegesteifigkeit des Stabs wird mit Vorteil dadurch erreicht, dass die Faserverstärkung aus Fasern aus der Gruppe der Glasfasern, Aramidfasern oder Carbonfasern sind. Denkbar sind jedoch auch andere Fasern, wie Natur- oder Kohlestofffasern .

Der Stab kann im Querschnitt grundsätzlich rund, 3-, 4-, 5-, 6-eckig oder noch mehreckiger (polygon)sein. Vorzugsweise hat der Stab radial abstehende, axial verlaufende Rippen. Durch die Rippen kann die Steifigkeit des Stabs weiter verbessert werden. Andererseits kann durch eine Rippenkonstruktion auch Material eingespart werden, sodass das Produkt trotz hoher Belastbarkeit ein geringes Gewicht aufweisen kann. Vorzugsweise beträgt die Rippenhöhe das 0.05 bis 0.5-fache des Stabradius, vorzugsweise das 0.1 bis 0.4-fache des Stabradius, und besonders bevorzugt das 0.2 bis 0.3-fache des Stabradius. Die Rippen können einen unterschiedlichen Querschnitt haben. Bevorzugt ist der Querschnitt der Rippen trapez- oder dreieckförmig. Durch die Rippen auch im Bereich angrenzend an das vordere Einführende wird die Oberfläche vergrössert, sodass nach dem Verkleben des Einführendes in einem Bohrloch sich auch die Auszugskraft vergrössert.

Eine vorteilhafte Ausführungsform sieht vor, dass der Stab im Querschnitt eine Sternform hat, d.h. insgesamt 4,5, 6 oder mehr Rippen am Umfang ausgeformt sind. Eine solche Konstruktion hat sich in der Praxis auch aus Symmetriegründen bewährt.

Dadurch, dass das vordere Ende als Keil- oder Konusspitze ausgebildet ist, kann der Stab der Konsole gut in ein Bohrloch eingeführt werden. Durch die Längsrippen, die auch im Bereich der Spitze teilweise vorhanden sind, kann der Mörtel im Bohrloch gut verdrängt werden, sodass sich der Stab leicht einführen lässt. Vorteilhaft ist der grösste Durchmesser des Einführendes um 0.5 bis 4, vorzugsweise 1 bis 3 mm kleiner als der grösste Durchmesser des Stabes. Dies hat den Vorteil, dass eine Klebemittelpatrone auf das vordere Ende aufgesetzt werden kann, ohne dass der Durchmesser des aus der Gebäudewand kragenden Stabs dadurch überschritten würde.

Zweckmässigerweise ist das Kopfstück mit der Befestigungsmöglichkeit am Stab befestigt und vorzugsweise auf diesen aufgesetzt. Dies hat den Vorteil, dass unterschiedliche Befestigungseinrichtungen oder Tragteile am Stab befestigt werden können.

Vorteilhaft ist das Kopfstück mit der Befestigungsmöglichkeit zweiteilig ausgeführt und weist ein Anschlussteil und ein Verbindungsteil auf. Dabei ist das als Aufsteckteil ausgeführte Anschlussteil am Stabende befestigt, und das Verbindungsteil ist am Anschlussteil befestigt resp. befestigbar.

Gemäss einer bevorzugten Ausführungsform sind am Anschlussteil und dem Verbindungsteil in Längsrichtung mehrere voneinander beabstandete Verbindungspositionen definiert. Dies hat den grossen Vorteil, dass die effektive Länge der ganzen Konsole bei gegebener Länge des Verbund-Kunststoffstabs in einem bestimmten Bereich variierbar ist. Dies ermöglicht es, mit 3 oder 4 verschiedenen Grundlängen des Verbund-Kunststoffstabs alte beim heutigen Hausbau anzutreffenden Dämmstoffstärken abzudecken. Das Anschlussteil und gegebenenfalls auch das Verbindungsteil können beispielsweise als stranggepresstes Profil aus Aluminium kostengünstig hergestellt werden.

Vorzugsweise ist zwischen dem Anschlussteil und dem Verbindungsteil eine Längsführung ausgebildet. Dies hat den Vorteil, dass Anschlussteil und Verbindungsteil quer zur Längsachse des Stabs formschlüssig umfasst sind, und eine hohe Stabilität der Konsole gewährleistet ist.

Das Verbindungsteil hat einen Verbindungsabschnitt, der zur Verbindung mit dem Anschlussteil dient, und einen Befestigungsabschnitt, an dem eine Profilschiene befestigbar ist. Der Verbindungsabschnitt hat in Richtung der Längsachse eine grössere Ausdehnung als das Anschlussteil. Dies ermöglicht, die effektive Länge der Konsole in einem bestimmten Bereich anzupassen, indem der Verbindungsabschnitt näher oder weiter entfernt zum vorderen Ende des Stabes am Anschlussteil befestigt wird. Diese Anpassung kann ohne Probleme auch auf der Baustelle vorgenommen werden. Im Befestigungsabschnitt des Verbindungsteils ist ein Schlitz vorgesehen, in dem eine Profilschiene aufnehm- und befestigbar ist. Das Vorsehen eines Schlitzes hat den Vorteil, dass eine Justierung in einem bestimmten Längenbereich möglich ist, indem die Schiene unterschiedlich weit in den Einführschlitz eingeschoben wird. Mit der beschriebenen Justiermöglichkeit lassen sich Unebenheiten einer Gebäudewand ausgleichen.

Zweckmässigerweise weist das Verbindungsteil einen als Kragarm dienenden Befestigungsabschnitt mit wenigstens einem Befestigungsdurchgang auf. Als Befestigungsdurchgang kann ein geschlossener oder halboffener Kanal dienen, in welchen eine Schraube eindrehbar ist.

Gemäss einer bevorzugten Ausführungsform ist auf das vordere Ende des Stabs eine einen Mörtel enthaltende Patrone aufgebracht. Als Mörtel soll im Rahmen der vorliegenden Erfindung jede aushärtende Masse, sei sie aus einer, zwei oder noch mehr Komponenten zusammengesetzt, verstanden werden.

Die Patrone ist üblicherweise als Hohlzylinder ausgebildet, dessen vorderes Ende durch einen Boden verschlossen ist und dessen hinteres Ende eine Öffnung aufweist. Durch die Öffnung kann ein Behälter mit einer Mörtelmasse in die Patrone eingefüllt sein. Denkbar ist, dass die Mörtelmasse mittels lediglich einer Trennwand von der Umgebung abgetrennt ist. Je nach Einsatzgebiet kann auch ein 2-Komponentenharz eingesetzt werden. In diesem Fall sind zwei voneinander getrennte Behälter nötig. Diese können ineinander verschachtelt oder als doppelwandiger Behälter ausgeführt sein. Die Patrone kann also einen äusseren Behälter und einen inneren Behälter aufweisen, wobei im Zwischenraum zwischen dem äusseren und dem inneren Behälter die eine Harzkomponente und im inneren Behälter die zweite Harzkomponente aufgenommen ist. Denkbar ist auch, dass die Mörtelpatrone losgelöst von der Konsole zuerst in das Bohrloch eingeführt wird.

Durch das Vorsehen eines radial nach aussen abstehenden Rand am hinteren Ende der Patrone kann sichergestellt werden, dass die Patrone nicht zu weit in ein zu tief gebohrtes Loch eintauchen kann. Auch wird damit gleichzeitig eine Grobjustierung erreicht.

Gegenstand der vorliegenden Erfindung ist auch ein Konsolensystem umfassend eine erfindungsgemässe Konsole und eine Mörtelpatrone. Dabei können Konsole und Mörtelpatrone als separate Einheiten eingesetzt werden, d.h. bei dem Konsolensystem kann die Mörtelpatrone zuerst in das Bohrloch eingesetzt und anschliessend der Stab der Konsole in die Patrone eingesteckt werden.

Ein weiterer Gegenstand der vorliegenden Erfindung ist eine Fassadenunterkonstruktion umfassend
- eine Tragkonstruktion,
- eine Mehrzahl von erfindungsgemässen Konsolen, deren vordere Enden in oder an der Tragkonstruktion befestigt sind und an deren hinteren Enden eine Verkleidung angeordnet ist.

Vorteilhaft ist das vordere Stabende mittels eines Klebers oder Mörtels stoffschlüssig mit der Tragkonstruktion verbunden. Der Stab kann mit Hülse und Klebemörtel gesetzt werden oder in Beton, Mauerwerk oder einem anderen festen Untergrund direkt mit Mörtel montiert werden.

Ein weiterer, unabhängiger Gegenstand der Erfindung ist eine Konsole für die Anbringung von Fassadenelementen an einer Gebäudewand mit
- einem als Distanzteil dienenden Stab, an dessen einem Ende ein Fussteil zur Befestigung der Konsole an einer Gebäudewand,
- einem Kopfstück, das dem Fussteil gegenüberliegend am Stab angeordnet ist und eine Befestigungsmöglichkeit für die Anbringung von Fassadenelementen besitzt. Die erfindungsgemässe Konsole ist dadurch gekennzeichnet, dass das Kopfstück mit der Befestigungsmöglichkeit aus zwei Teilen hergestellt ist und ein Anschlussteil und ein Verbindungsteil aufweist. Diese Art der Verstellbarkeit kann auch bei Konsolen mit einem separaten Fussteil, das mit Hilfe von Schrauben an oder auf die Gebäudewand montiert wird, vorteilhaft eingesetzt werden. Die Herstellung aus zwei Teilen hat den Vorteil, dass die Länge der Konsole in einem bestimmten Längenbereich anpassbar ist.

Vorteilhaft ist zwischen dem Anschlussteil und dem Verbindungsteil eine Längsführung vorgesehen ist. Die Längsführung sorgt für eine grosse Stabilität quer zur Längsachse des Stabes, auch wenn das Kopfstück aus zwei Teilen hergestellt ist. Ausserdem können Anschlussteil und Verbindungsteil relativ zueinander verschoben werden. Die relative Längsverschiebbarkeit der Teile kann vergrössert werden, indem der Verbindungsabschnitt des Verbindungsteils in Achsrichtung gesehen länger als das Anschlussteil ist.

Ausführungsbeispiele der Erfindung werden nun unter Bezugnahme auf die Zeichnungen beschrieben. Es zeigt:
- Figur 1:: Eine erfindungsgemässe Konsole mit separater Patrone mit Mörtel;
- Figur 2:: Die Konsole von Fig. 1 mit aufgesetzter Patrone;

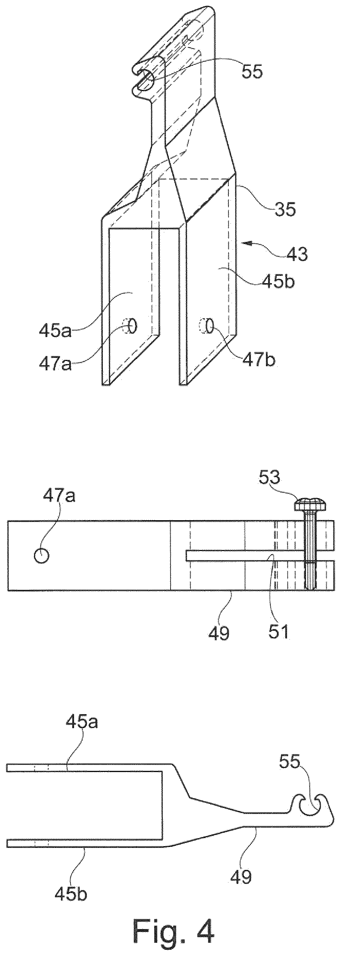

- Figuren 3 und 4:: Die beiden Teile eines Kopfstücks für die Befestigung von Fassadenteilen bestehend aus einem Anschlussteil (Fig. 3) dargestellt in der Perspektive, Front- und Seitenansicht, und einem Verbindungsteil dargestellt in der Perspektive, Seitenansicht und Draufsicht;
- Figur 5:: Eine mit einer Dämmung versehene Gebäudewand mit einem Bohrloch zur Aufnahme des Konsolenstabs;
- Figur 6:: Die Gebäudewand von Fig. 5 mit ins Bohrloch eingeführtem Stab;
- Figur 7:: Der im Bohrloch fest verklebte Stab;
- Figur 8:: Eine Fassadenunterkonstruktion mit der erfindungsgemässen Konsole;
- Figuren 9:: eine in einer Gebäudewand versetzte Konsole mit einem daran montierten Verbindungsteil einer ersten Art und einer horizontalen Profilschiene in zwei unterschiedlichen Positionen;
- Figur 10:: wie Figur 9, jedoch mit nach aussen versetzt angeordnetem Verbindungsteil;
- Figuren 11:: eine in einer Gebäudewand versetzte erfindungsgemässe Konsole mit einem daran montierten Verbindungsteil einer zweiten Art und einer vertikalen Profilschiene in zwei unterschiedlichen Positionen;
- Figur 12:: wie Figur 11, jedoch mit nach aussen versetzt angeordnetem Verbindungsteil;
- Figur 13:: eine in einer Gebäudewand versetzte erfindungsgemässe Konsole mit einem daran montierten Verbindungsteil einer dritten Art und einer vertikalen Profilschiene in zwei unterschiedlichen Positionen;
- Figur 14:: wie Figur 13, jedoch mit nach aussen versetzt angeordnetem Verbindungsteil;
- Figur 15:: eine perspektivische Ansicht einer weiteren Ausführungsform eines Anschlussteils mit Stab;
- Figur 16:: das Anschlussteil gemäss Fig. 15 mit einem Verbindungsteil der dritten Art. und
- Figur 17:: eine Konsole mit einem Fuss und einem Kopfstück in perspektivischer Ansicht.

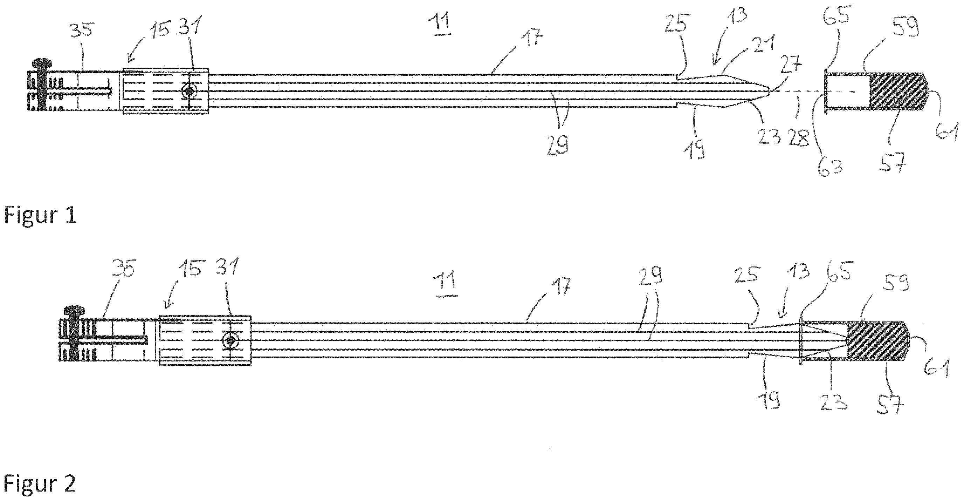

Die Figuren 1 und 2 zeigen eine erfindungsgemässe Konsole 11 mit einem Stab 17 mit einem vorderen Einführende 13, das für die Aufnahme in einem Bohrloch in einer Gebäudewand gedacht ist und einem am gegenüberliegenden Ende des Stabs angeordneten Kopfstück 15 zur Befestigung von Profilschienen, an denen die Fassadenelemente angeordnet werden können. Denkbar ist jedoch auch, dass die Fassadenelemente auch direkt am Kopfstück 15 befestigt werden. Das Einführende 13 ist mittels eines verjüngten Abschnitts 19, der einen kleineren Durchmesser hat als der übrige Stab 17 und die dickste Stelle 21 des vorderen Endabschnitts 13, vom Schaft 17 abgesetzt. Den Übergang zwischen dem verjüngten Abschnitt 19 und dem Schaft 17 bildet ein Ringabsatz 25. Vom Ringabsatz 25 in Richtung Spitze 27 nimmt der Durchmesser des Stabes kontinuierlich zu, bis er am Punkt 21 den grössten Durchmesser erreicht. Nach dem Punkt 21 nimmt der Durchmesser bis zur Spitze 27 kontinuierlich ab und definiert dabei eine Keil- oder eine Konusspitze 23. Unter kontinuierlicher Zu- resp. Abnahme soll dabei eine gleichmässige oder ungleichmässige Zu- resp. Abnahme verstanden werden, sodass die entsprechenden Konturen im Längsschnitt linien- oder bogenförmig sind.

Der Stab 17 ist aus einem Faserverbundwerkstoff hergestellt. Der Faserverbundwerkstoff besteht aus einer Matrix und eine darin angeordnete Faserverstärkung aus in Längsrichtung angeordneten (Endlos-)Fasern, insbesondere Rovingsträngen oder Filamentfasern. Aber auch Langfasern oder unidirektionale Gelege in Längsrichtung des Stabes angeordnet sind als Fasern einsetzbar. Die Matrix des Verbundwerkstoffs ist aus einem geeigneten Kunststoff gebildet. Durch die Verwendung eines Verbundwerkstoffes ist ein Stab 17 realisiert, der den Belastungen von zu tragenden Fassadenelementen 77 gewachsen ist und die Bildung von praktisch vollständig Wärmebrücken unterbindet.

Zu beachten ist, dass der Durchmesser am Punkt 21 etwas kleiner sein kann als der rückwärtige Schaftdurchmesser, damit - wie weiter unten noch erklärt wird - eine Mörtelpatrone auf das Einführende 13 aufgesteckt werden kann.

Der Stab 17 hat am Umfang in Achsrichtung 28 (Fig. 1) verlaufende Längsrippen 29 ausgebildet mit einem im Wesentlichen dreieckförmigen Querschnitt. Dies verleiht dem Stab im Querschnitt eine Sternform. Durch die Längsrippen 29 ergibt sich eine Vergrösserung der Mantelfläche, sodass bei einer Verklebung des vorderen Endabschnittes in einem Bohrloch eine höhere Auszugskraft resultiert.

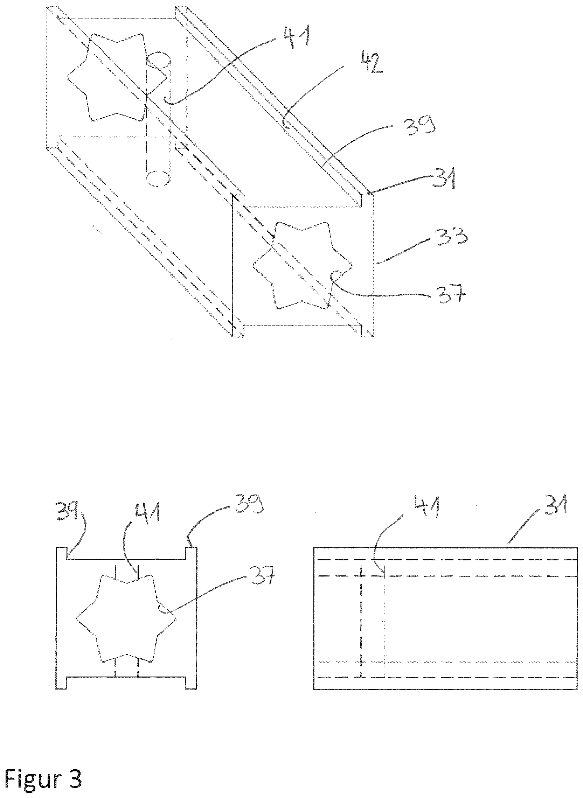

Am hinteren Ende 15 des Stabs 17 ist ein Anschlussteil 31 angeordnet, welches in der Figur 3 näher im Detail gezeigt ist. Das Anschlussteil 31 kann mittels geeigneter Befestigungsmittel, wie z.B. Schrauben oder Nieten, am Schaft des Stabes 17 befestigt sein. Denkbar ist jedoch auch, dass das Anschlussteil mit dem Stab stoffschlüssig mittels eines Klebers verbunden ist. Zur Erhöhung der Stabilität der Verbindung zwischen Stab 17 und Anschlussteil 31 besitzt letzteres gemäss Figur 3 eine hohlzylindrische Aufnahme 37, in die das hintere Ende des Schaftes formschlüssig eingesetzt und in dieser Lage befestigt oder befestigbar ist. Das Anschlussteil 31 ist gemäss dem dargestellten Ausführungsbeispiel ein quaderförmiger Metallblock 33, vorzugsweise aus Aluminium, in welchem eine dem Aussenprofil des Schaftes entsprechende Aufnahme 37 in Gestalt eines Kanals ausgebildet ist. Eine im Anschlussteil 31 vorgesehene Durchgangsöffnung 41 dient der Aufnahme einer Schraube oder Niete 38 zur Befestigung desselben am Schaft 17 (s. Figuren 5 und 6).

Das Anschlussteil 31 dient der Befestigung eines Verbindungsteils 35, das am Anschlussteil 31 längsverschieblich geführt und in unterschiedlichen Positionen befestigbar ist. Dies hat den grossen Vorteil, dass die Gesamtlänge der Konsole bei der Produktion in einem bestimmten Bereich variierbar ist. Zu diesem Zweck ist zwischen dem Anschlussteil 31 und dem Verbindungsteil 35 eine parallel zur Stabachse 28 verlaufende Längsführung vorgesehen. Diese Längsführung ist im gezeigten Ausführungsbeispiel durch zwei seitliche Leisten 39 realisiert, die an zwei einander gegenüberliegenden Flachseiten des Anschlussteils 31 ausgebildet sind und in die ein U-förmiges Kopfstück 43 des Verbindungsteils 35 eingreifen kann.

Das U-förmige Kopfstück 43 besitzt zwei Schenkel 45a,45b, welche zwischen den Leisten 39 des Anschlussteils 31 Platz finden. In den Schenkeln 45a,45b sind in Übereinstimmung mit der Durchgangsöffnung 41 des Anschlussteils 31 jeweils ein oder mehrere Löcher 47a,47b vorgesehen, die zur Verbindung mit dem Anschlussteil 31 mit der Durchgangsöffnung 41 in Übereinstimmung gebracht werden können. Wenn in Längsrichtung des Verbindungsteils 35 mehrere Löcher 47a,47b vorgesehen sind, kann die Länge der Konsole noch bei der Produktion angepasst werden.

Das Verbindungsteil 35 besitzt einen Verbindungsabschnitt 48 zur Verbindung mit dem Anschlussteil 31 und einen Befestigungsabschnitt 49 zur Befestigung einer Profilschiene oder eines Fassadenelements. Der Befestigungsabschnitt 49 besitzt einen Schlitz 51, der der Aufnahme eines flachen Befestigungselements, z.B. des Schenkels einer T-Profilschiene, dient. Fixiert wird das eingeschobene Befestigungselement mittels einer Schraube 53, welche in einen Kanal 55, der sich rechtwinklig zur Längsachse des Stabs erstreckt, einschraubbar ist.

Zur Verankerung des vorderen Einführendes 13 in einem Bohrloch ist eine mit einem Mörtel 57 teilgefüllte Patrone 59 vorgesehen, welche auf das Einführende 13 aufsteckbar ist (Figuren 1 und 2). Der Mörtel kann schon ab Werk in die Patrone 59 eingefüllt sein und die Patrone ist dann an ihrer Öffnung 63 mit einem Deckel verschlossen, damit der Mörtel nicht eintrocknet. Der Deckel wird entweder vor der Montage entfernt oder beim Setzen des Stabs 17 von der Stabspitze 27 durchstossen. Denkbar ist es auch, dass der Mörtel erst kurz vor der Montage der Konsole 11 in die Patrone 59 gefüllt wird. Die Patrone 59 ist vorzugsweise als Hohlzylinder ausgebildet, dessen vorderes Ende durch einen Boden 61 verschlossen ist und dessen hinteres Ende die Öffnung 63 aufweist. Am hinteren Ende der Patrone ist ein radial nach aussen abstehender Rand 65 vorgesehen. Dieser hat den Zweck, die Patrone am Rand des Bohrlochs zurückzuhalten.

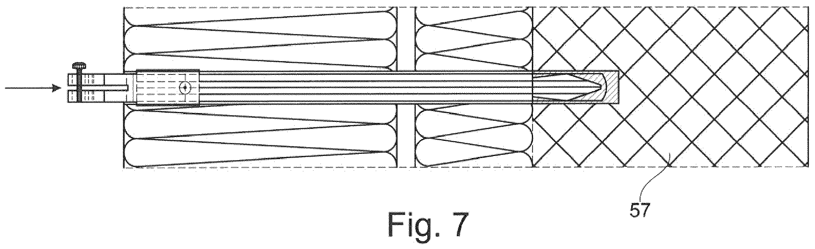

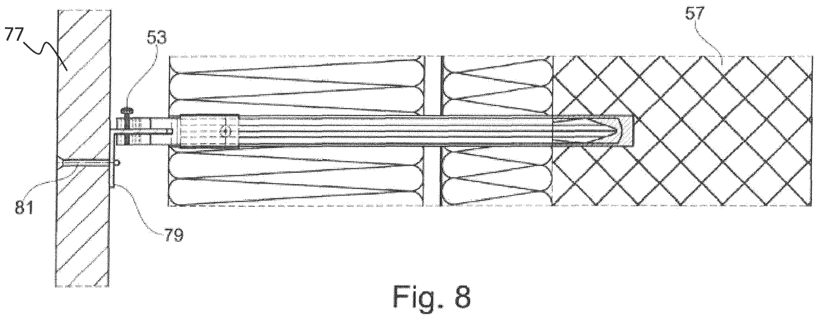

In den Figuren 5 bis 8 ist die Verwendung der erfindungsgemässen Konsole in mehreren Verfahrensschritten näher im Detail beschrieben. Gezeigt ist eine Gebäudewand 67, welche auf der einen Seite bereits mit einer ersten Dämmung 69 versehen ist. Zwecks Sanierung ist auf die bereits gedämmte Gebäudewand 67 eine zweite Dämmung 71 aufgebracht. In Figur 5 ist dies als Ausgangszustand dargestellt. Durch die Dämmungen 69,71 ist schon ein Loch 73 zum Einführen des Stabs 17 gebohrt. In der Gebäudewand 67 selbst ist ein Bohrloch 75 vorgesehen, dessen Tiefe mindestens der Länge der Patrone, die auf das vordere Ende des Stabs 17 aufgebracht ist, entspricht. In Figur 6 ist die Konsole mit aufgesteckter Patrone 59 bereits ins Bohrloch eingesteckt, wobei der Rand 65 der Patrone 59 die Eintauchtiefe begrenzt. Wird nun der Stab weiter in das Bohrloch gedrückt, wird der Behälter mit dem Mörtel 57 zerstört und der Mörtel durch nicht näher gezeigte Durchtrittsöffnungen im Patronenmantel ins Bohrloch gedrückt (Fig. 7). Idealerweise füllt der Mörtel dann die Freiräume zwischen der Bohrlochwandung und dem Einführende vollständig aus. Nach dem Aushärten der Mörtelmasse kann dann an der Konsole 11 ein Fassadenelement 77 befestigt werden (Fig. 8). Dazu wird eine Profilschiene 79 in den Schlitz 51 eingeführt und nach einer Justierung mit der Schraube 53 festgeschraubt. Das Fassadenelement 77 wird sodann ebenfalls mit einer oder mehreren Schrauben 81 an der Profilschiene 79 befestigt (Fig.8).

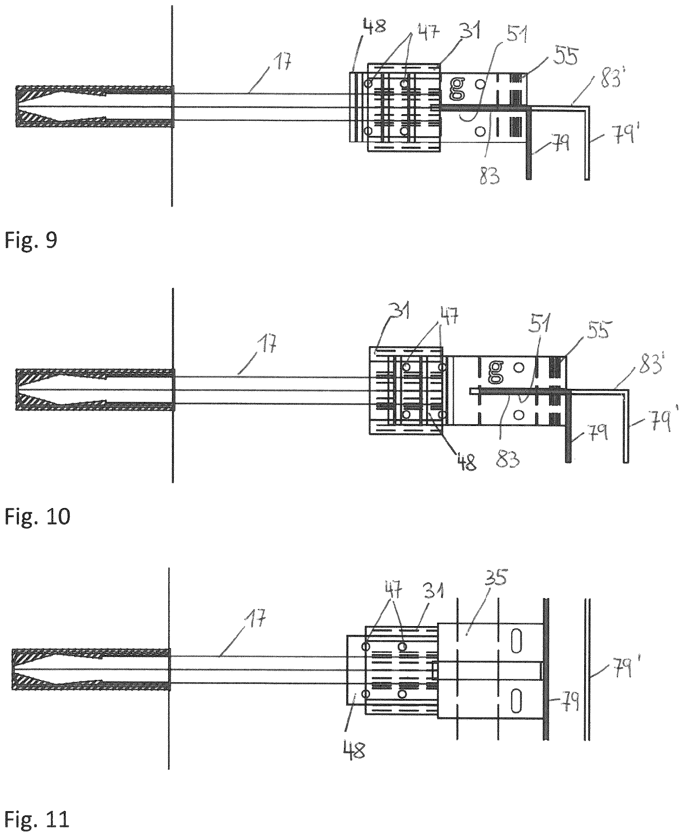

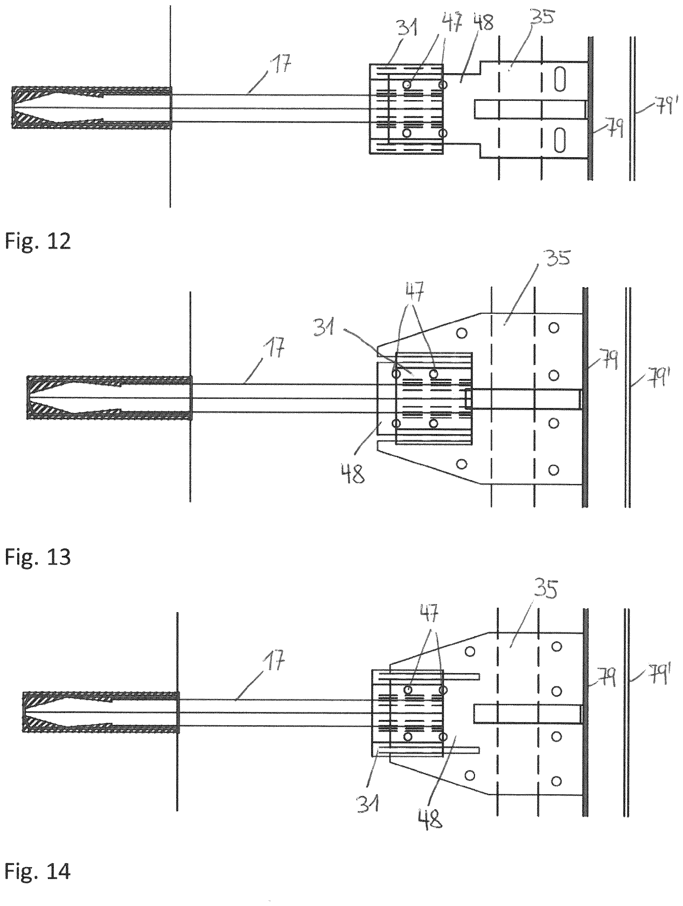

Die Figuren 9 bis 14 zeigen die Konsole jeweils mit unterschiedlichen Verbindungsteilen 31 und in unterschiedlichen Fassadenunterkonstruktionen. Letztere unterscheiden sich im Wesentlichen dadurch voneinander, dass die an den Verbindungsteilen 35 befestigten resp. befestigbaren Profilschienen 79 entweder horizontal oder vertikal angeordnet sind.

Die Figuren 9 bis 14 veranschaulichen auch, wie die Länge der Konsole variiert werden kann. Gemäss einer ersten Verstellmöglichkeit kann der Schenkel 83 der Schiene 79 bei der Montage auf dem Bau unterschiedlich weit in den Schlitz 51 eingeschoben und dann fixiert werden. In den Figuren 9 bis 14 zeigt die mit einer Schraffur eingezeichnete Profilschiene 79 die eine Extremposition und die mit Linien gezeichnete Profilschiene 79' die andere Extremposition der möglichen Längenveränderung resp, Justierung. Die beschriebene Verstellmöglichkeit kann insbesondere dazu benützt werden, um Ungenauigkeiten der Gebäudewand oder Differenzen wegen unterschiedlich tief eingesetztem Konsolenstab auszugleichen. In der Praxis können so Justierungen im Bereich zwischen ungefähr 20 und 40 oder 50 mm vorgenommen werden.

Die zweite Verstellmöglichkeit besteht darin, das Verbindungsteil 35 in Längsrichtung des Stabs gesehen an unterschiedlichen Positionen am Anschlussteil 31 zu befestigen. Von dieser Möglichkeit kann bereits bei der Produktion oder erst auf der Baustelle Gebrauch gemacht werden. Zu diesem Zweck kann das längliche Verbindungsteil vorzugsweise mehrere in Längsrichtung voneinander beabstandete Bohrungen 47 aufweisen, die mit den entsprechenden Durchgangsöffnungen des Anschlussteils 31 in Übereinstimmung gebracht werden können und in die dann zur Befestigung der beiden Teile miteinander eine Schraube eingeschraubt oder eine Niete eingesetzt werden kann. (vgl. Figuren 9 und 10, resp. 11 und 12 oder 13 und 14). Die Abstände der Bohrungen 47 voneinander sind so gewählt, dass mit wenigen Grundlängen des Stabs 17 sich die Länge der erfindungsgemässen Konsole an praktisch jede Wärmedämmstärke anpassen lässt. Dies hat den Vorteil, dass nur wenige Stablängen vorrätig gehalten werden müssen. Mit der zweiten Verstellmöglichkeit kann die Länge der Konsole noch einmal um rund zwischen 20 und 50 mm verändert werden.

Beide erwähnten Verstellmöglichkeiten zusammen erlauben somit, die effektive Länge der Konsole zwischen ungefähr 20 mm und 90 mm zu verändern.

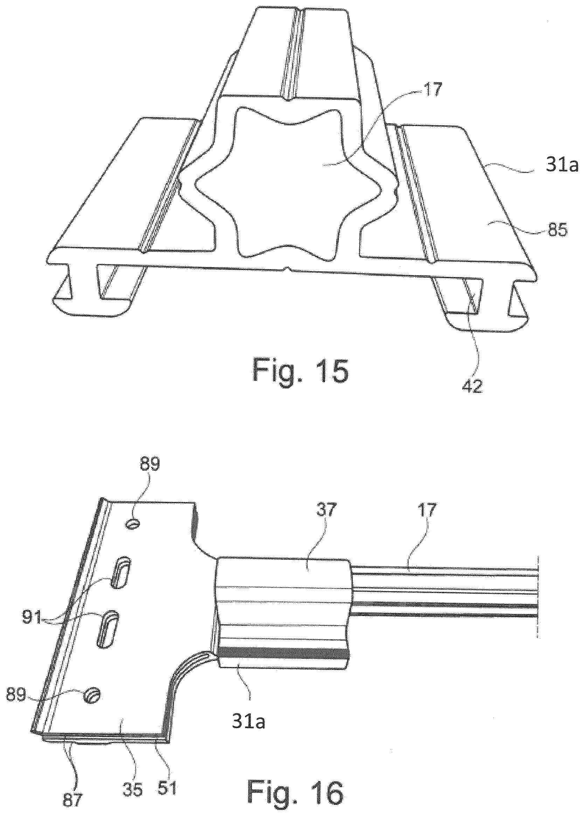

Figur 15 zeigt eine weitere Ausführungsform eines Anschlussteils 31, das durch Ablängen eines entsprechend hergestellten Aluminium-Strangpressprofils erhalten werden kann. Das Anschlussteil 31a besitzt eine Anschlussplatte 85, an welcher auf der einen Seite der Aufnahmekanal 37 angeordnet und auf der anderen Seite die Führung 42 in Gestalt einer Flachführung ausgebildet ist. Die Führung 42 besteht aus zwei einander gegenüberliegenden Umgriffleisten 84. Durch die Führung 42 ist der vom Verbindungsteil 35 abragende Verbindungsabschnitt 48 längsverschieblich geführt.

In der Figur 16 ist das Anschlussteil 31a mit einem daran angeordnet Verbindungsteil 35 gezeigt. Das Verbindungsteil 35 unterscheidet sich von den bereits beschriebenen dadurch, dass dieses aus zwei voneinander beabstandeten Platten 87 besteht, zwischen denen der Schlitz 51 definiert ist. In den Platten 87 sind Rundlöcher 89 und Langlöcher 91 für die Befestigung von horizontalen Profilschienen 79 vorgesehen.

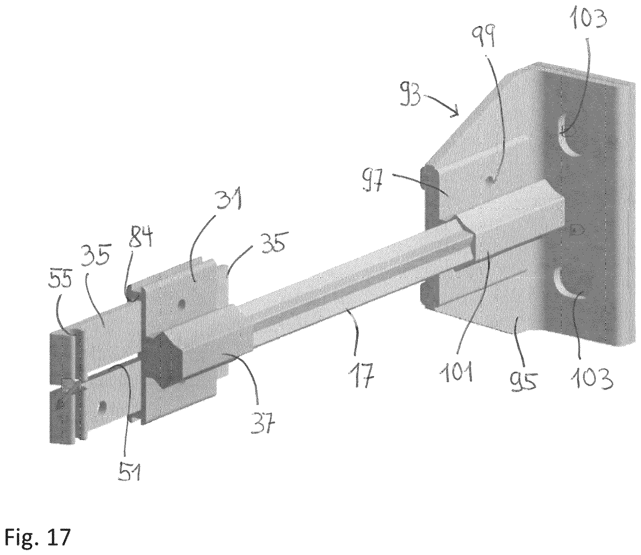

In Figur 17 ist die Stabspitze durch ein Fussteil 93 ersetzt. Das Fussteil 93 besteht aus einem Winkelstück 95 und einem Anschlussteil 97, wobei letzteres auf das Winkelstück 95 aufgesteckt und mittels einer Niete 99 befestigt ist. Ähnlich dem Verbindungsteil 35 ist auch das Anschlussteil 97 quer zur Längsachse formschlüssig umfasst und axial geführt. Am Anschlussteil ist eine Aufnahme 101 für die formschlüssige Aufnahme des Stabs 17 angeordnet resp. angeformt. Im Winkelstück 95 sind Rundlöcher 103 für die Aufnahme von Schrauben vorgesehen.

Die Konsole 11 wird wie folgt bereitgestellt: Die Stäbe 17 werden in 3 bis 5, vorzugsweise 4 Grundlängen beginnend bei ca. 80 mm und endend bei ca. 250 mm bereitgestellt. Die Stäbe können dabei in den gewünschten Grundlängen produziert oder von Stäben einer grösseren Länge abgelängt werden. Die Stabspitze mit der Hinterschneidung wird in einem separaten Arbeitsgang auf einer Werkzeugmaschine hergestellt. Die Längsrillen bleiben - je nachdem wie viel Material abgedreht wird - dabei auch in der Stabspitze erhalten. Danach wird das Anschlussteil 31 am Stab 17 befestigt. Entsprechend den Erfordernissen eines Arbeitsauftrags wird die passende Grundlänge einer halbfertigen Konsole ausgewählt und das gewünschte Verbindungsteil 35 am Anschlussteil montiert. Erst bei der Montage wird dabei die definitive Länge der Konsole festgelegt.

Ein Stab soll folgende Mindestspezifikationen aufweisen:

### Legende

- 11: Konsole
- 13: vorderes Einführende
- 15: Hinteres Kopfstück
- 17: Stab
- 19: verjüngter Abschnitt des vorderen Einführendes
- 21: dickste Steife der Einführspitze
- 23: Keilsspitze des Stabs
- 25: Ringabsatz
- 27: Spitze
- 29: Längsrippen
- 31: Anschlussteil
- 33: Metallblock
- 35: Verbindungsteil
- 37: Kanal
- 38: Schraube oder Niete zur Befestigung des Anschlussteils am Schaft 17
- 39: Seitliche Leisten zur Längsführung
- 41: Durchgangsöffnung
- 42: Führung
- 43: U-förmiges Kopfstück
- 45a,45b: Schenkel des Verbindungsteils 35
- 47a,47b: Löcher in den Schenkeln
- 48: Verbindungsabschnitt
- 49: Befestigungsabschnitt (Kragarm)
- 51: Schlitz
- 53: Schraube
- 55: Kanal
- 57: Mörtel
- 59: Patrone
- 61: Boden
- 63: Öffnung der Patrone
- 65: Rand
- 67: Gebäudewand
- 69: erste Dämmung
- 71: zweite Dämmung
- 73: Loch durch die Dämmungen
- 75: Bohrloch in der Gebäudewand
- 77: Fassadenelement
- 79: Profilschiene (Winkelprofil)
- 81: Schrauben
- 83: Schenkel der Profilschiene
- 84: Umgriffsleisten
- 85: Anschlussplatte
- 87: beabstandete Platten eines Verbindungsteils
- 89: Rundlöcher
- 91: Langlöcher
- 93: Fussteil
- 95: Winkelstück
- 97: Anschlussteil
- 99: Niete
- 101: Aufnahme
- 103: Rundlöcher im Winkelstück

## Patentansprüche

1. Konsole (11) für die Anbringung von Fassadenelementen an einer Gebäudewand mit
- einem Stab, der ein vorderes Einführende (13) aufweist zur Verankerung in einer Gebäudewand (67),
- einem hinteren Kopfstück (15), das am hinteren Ende des Stabs angeordnet ist und eine Befestigungsmöglichkeit (33,35) für die Anbringung von Fassadenelementen besitzt,
wobei der Stab aus Kunststoff hergestellt ist und eine in der Kunststoffmatrix integrierte Faserverstärkung besitzt, und
das vordere, zur Verankerung in einer Gebäudewand vorgesehene Einführende (13) mindestens einen im Durchmesser verjüngten Zwischenabschnitt (19) aufweist
**dadurch gekennzeichnet, dass**
das vordere Ende (13) des Stabs als Konus- oder Keilspitze (23) ausgebildet ist und daran anschliessend der verjüngte Zwischenabschnitt folgt.

2. Konsole nach Anspruch 1 , **dadurch gekennzeichnet, dass** die Faserverstärkung des Stabs aus in Längsrichtung angeordneten Fasern, insbesondere Rovingsträngen oder Filamentfasern, hergestellt ist.

3. Konsole nach einem der Ansprüche 1 bis 2, **dadurch gekennzeichnet, dass** der Schaft (17) des Stabs radial abstehende, axial verlaufende Rippen (29) aufweist.

4. Konsole nach Anspruch 3, **dadurch gekennzeichnet, dass** die Rippenhöhe das 0.05 bis 0.5-fache des Stabradius, vorzugsweise das 0.1 bis 0.4-fache des Stabradius, und besonders bevorzugt das 0.2 bis 0.3-fache des Stabradius beträgt.

5. Konsole nach einem der Ansprüche 1 bis 4, **dadurch gekennzeichnet, dass** der grösste Durchmesser des Einführendes (13) um 0.5 bis 4, vorzugsweise 1 bis 3 mm kleiner ist als der grösste Durchmesser des Stabes (17).

6. Konsole nach einem der Ansprüche 1 bis 5, **dadurch gekennzeichnet, dass** das Kopfstück (15) mit der Befestigungsmöglichkeit (15) zweiteilig ausgeführt ist und ein Anschlussteil (31) und ein Verbindungsteil (35) aufweist.

7. Konsole nach einem der Ansprüche 1 bis 6, **dadurch gekennzeichnet, dass** am Anschlussteil (31) und dem Verbindungsteil (35) in Längsrichtung mehrere voneinander beabstandete Verbindungspositionen definiert sind.

8. Konsole nach einem der Ansprüche 1 bis 7, **dadurch gekennzeichnet, dass** zwischen dem Anschlussteil (31) und dem Verbindungsteil (35) eine Längsführung vorgesehen ist.

9. Konsole nach einem der Ansprüche 1 bis 8, **dadurch gekennzeichnet, dass** im Verbindungsteil (35) ein in Längsrichtung des Stabs sich erstreckender Schlitz (51) vorgesehen ist, in welchem eine Profilschiene (79) befestigbar ist.

10. Konsole nach einem der Ansprüche 1 bis 9, **dadurch gekennzeichnet, dass** auf das vordere Einführende eine einen Mörtel (57) enthaltende Patrone (59) aufgesetzt ist.

11. Fassadenunterkonstruktion umfassend
- eine Tragkonstruktion
- eine Mehrzahl von Konsolen gemäss einem der Ansprüche 1 bis 10, deren vordere Enden in der Tragkonstruktion verankerbar und an deren hinteren Enden eine Verkleidung anbringbar ist; und
- eine Verkleidung, die an den hinteren Enden der Tragelemente befestigbar ist

12. Fassadenunterkonstruktion nach Anspruch 11, **dadurch gekennzeichnet, dass** das vordere Ende des Stabs mittels eines Klebers oder Mörtels stoffschlüssig mit der Tragkonstruktion verbunden ist.

## Claims

1. Console (11) for the mounting of façade elements to a wall of a building with
- a rod that has a front insertion end (13) for anchoring in a wall of a building (67),
- a rear head piece (15) that is placed at the rear end of the rod and that has a fixing possibility (33, 35) for the mounting of façade elements,
wherein the rod is made of plastic and has a fiber reinforcement integrated in the plastic matrix and
the front insertion end (13) provided for anchoring in a wall of a building has at least one intermediate portion (19) tapered in diameter,
**characterized in that**
the front end (13) of the rod is configured as a cone or chisel tip (23) and the tapered intermediate section follows and connects therewith.

2. Console according to claim 1, **characterized in that** the fiber reinforcement of the rod is made of fibers placed in longitudinal direction, in particular of rovings or filament fibers.

3. Console according to one of the claims 1 to 2, **characterized in that** the shaft (17) of the rod has radially projecting axially extending ribs (29).

4. Console according to claim 3, **characterized in that** the rib height is 0.05 to 0.5 times the rod radius, preferably 0.1 to 0.4 times the rod radius and particularly preferable 0.2 to 0.3 times the rod radius.

5. Console according to one of the claims 1 to 4, **characterized in that** the biggest diameter of the insertion end (13) is 0.5 up to 4 mm smaller, preferably 1 to 3 mm smaller than the biggest diameter of the rod (17).

6. Console according to one of the claims 1 to 5, **characterized in that** the head piece (15) is executed in two parts and has a attachment part (31) and a connecting part (35).

7. Console according to one of the claims 1 to 6, **characterized in that** several connecting positions spaced from each other are defined on the attachment part (31) and on the connecting part (35) in longitudinal direction.

8. Console according to one of the claims 1 to 7, **characterized in that** a longitudinal guide is provided between the attachment part (31) and the connecting part (35).

9. Console according to one of the claims 1 to 8, **characterized in that** a lot (51) extending in longitudinal direction of the rod in which a profile rail (79) can be fixed is provided in the connecting part (35).

10. Console according to one of the claims 1 to 9, **characterized in that** a cartridge (59) that contains a mortar (57) is set on the front insertion end.

11. Facade substructure comprising
- a supporting structure,
- a multitude of consoles according to one of the claims 1 to 10, the front ends thereof can be anchored in the supporting structure and to the rear ends thereof a cladding can be mounted and
- a cladding that can be fixed at the rear ends of the supporting elements.

12. Façade substructure according to claim 11, **characterized in that** the front end of the rod is integrally connected to the supporting structure by means of an adhesive or of a mortar.

## Revendications

1. Console (11) pour la fixation d'éléments de façade à un mur de bâtiment avec
- une tige qui a une extrémité d'insertion antérieure (13) pour l'ancrage dans un mur de bâtiment (67),
- une partie postérieure de tête (15) qui est placée à l'extrémité postérieure de la tige et qui possède une possibilité de fixation (33, 35) pour la fixation d'éléments de façade,
la tige étant fabriquée en matière plastique et possédant un renforcement en fibres intégré dans la matrice en matière plastique et
l'extrémité d'insertion antérieure (13) prévue pour l'ancrage dans un mur de bâtiment ayant au moins une section intermédiaire de diamètre réduit,
**caractérisée en ce que**
l'extrémité antérieure (13) de la tige est configurée comme une pointe de cône ou de coin (23) et que la section intermédiaire diminuée la suit.

2. Console selon la revendication 1, **caractérisée en ce que** le renforcement en fibres de la tige est fabriqué en fibres placées dans le sens longitudinal, en particulier des mèches de stratifils ou des fibres de filaments.

3. Console selon l'une des revendications 1 à 2, **caractérisée en ce que** le corps (17) de la tige présente des nervures (29) s'étendant dans le sens axial qui font saillie radialement.

4. Console selon la revendication 3, **caractérisée en ce que** la hauteur des nervures est de 0,05 à 05 fois le rayon de la tige, de préférence de 0,1 à 0,4 le rayon de la tige et de manière particulièrement préférée de 0,2 à 0,3 le rayon de la tige.

5. Console selon l'une des revendications 1 à 4, **caractérisée en ce que** le plus grand diamètre de l'extrémité d'insertion (13) est de 0,5 à 4 mm plus petite, de préférence de 1 à 3 mm plus petite, que le plus grand diamètre de la tige (17).

6. Console selon l'une des revendications 1 à 5, **caractérisée en ce que** la partie de tête (15) est réalisée en deux parties avec la possibilité de fixation (15) et présente une partie de raccordement (31) et une partie de liaison (35).

7. Console selon l'une des revendications 1 à 6, **caractérisée en ce que** plusieurs positions de liaison espacées l'une de l'autre sont définies sur la partie de raccordement (31) et la partie de liaison (35) dans le sens longitudinal.

8. Console selon l'une des revendications 1 à 7, **caractérisée en ce qu'**un guidage longitudinal est prévu entre la partie de raccordement (31) et la partie de liaison (35).

9. Console selon l'une des revendications 1 à 8, **caractérisée en ce qu'**une fente (51) qui s'étend dans le sens longitudinal de la tige, dans laquelle un rail profilé (79) peut être fixé, est prévue dans la partie de liaison (35).

10. Console selon l'une des revendications 1 à 9, **caractérisée en ce qu'**une cartouche (59) qui contient un mortier (57) est installée sur l'extrémité d'insertion antérieure.

11. Sous-structure de façade comprenant
- une construction porteuse,
- une multitude de consoles selon l'une des revendications 1 à 10, dont les extrémités antérieures peuvent être ancrées dans la construction porteuse et aux extrémités postérieures desquelles un habillage peut être fixé et
- un habillage qui peut être fixé aux extrémités postérieures des éléments porteurs.

12. Sous-structure de façade selon la revendication 11, **caractérisée en ce que** l'extrémité antérieure de la tige est reliée par liaison de matière à la construction porteuse au moyen d'une colle ou d'un mortier.
